(19) Europäisches Patentamt
European Patent Office
Office européen des brevets

(11) **EP 1 517 125 B1**

(12) **FASCICULE DE BREVET EUROPÉEN**

(45) Date de publication et mention
de la délivrance du brevet:
**11.05.2011 Bulletin 2011/19**

(51) Int Cl.:
***G01K 13/02*** *(2006.01)*

(21) Numéro de dépôt: **04103953.8**

(22) Date de dépôt: **18.08.2004**

(54) **Dispositif et procédé de détermination de la température totale pour aéronef**

Vorrichtung und Verfahren zur Bestimmung der Gesamttemperatur für ein Luftfahrzeug

Device and method for determining the total temperature for an aircraft

(84) Etats contractants désignés:
**AT BE BG CH CY CZ DE DK EE ES FI FR GB GR HU IE IT LI LU MC NL PL PT RO SE SI SK TR**

(30) Priorité: **16.09.2003 FR 0310869**

(43) Date de publication de la demande:
**23.03.2005 Bulletin 2005/12**

(73) Titulaire: **Thales**
**92526 Neuilly Sur Seine (FR)**

(72) Inventeurs:
• **Hanson, Nicolas,**
**c/o Thales Int. Prop.**
**94117, Arcueil (FR)**
• **Collot, Lionel,**
**c/o Thales Int. Prop.**
**94117, Arcueil (FR)**

(74) Mandataire: **Collet, Alain et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**EP-A- 1 514 085      WO-A-01/88496**
**WO-A-03/050496      US-A- 5 025 661**

• **GOODRICH CORPORATION: 'Total Temperature Sensors - Technical Report 5755' INTERNET CITATION, [en ligne] 2002, XP007915782 Extrait de l'Internet: <URL:http://www.goodrich.com/ portal/goodric h/images/Goodrich%20Content/ Business%20Cont ent/ Sensors%20and%20Integrated%20Systems/Pr oducts/Literature%20Listing/ 4100%20TAT%20Re port.pdf> [extrait le 2010-11-16]**

**Description**

L'invention se rapporte à un dispositif et à un procédé de détermination de la température totale pour aéronef. Ce procédé et ce dispositif trouvent une utilité particulière dans une sonde, dite multifonction, permettant de mesurer plusieurs paramètres aérodynamiques comme par exemple la pression totale Pt, la pression statique Ps et la température totale TAT d'un écoulement d'air entourant l'aéronef.

La demande de brevet français FR 2 802 647 déposée le 17 décembre 1999 au nom de THOMSON-CSF décrit une telle sonde comportant un tube de Pitot pour mesurer la pression totale Pt de l'écoulement d'air et des moyens de mesure de la température totale TAT sous forme d'un canal dont l'orifice d'entrée d'air fait sensiblement face à l'écoulement et d'une chambre comportant un capteur de température. La chambre prélève une partie de l'air circulant dans le canal.

La mesure de ces deux paramètres, température et pression totales, contribue à déterminer la vitesse réelle de l'aéronef. Avantageusement, la sonde multifonction comporte en outre des moyens de mesure de la pression statique Ps et de l'incidence $\alpha$ de l'écoulement d'air entourant l'aéronef. On dispose alors de l'ensemble des paramètres nécessaires pour déterminer le module et la direction du vecteur vitesse de l'aéronef.

La mesure de température totale suppose théoriquement que les filets d'air pour lesquels la température est mesurée aient une vitesse nulle. En revanche, on doit assurer une certaine ventilation autour du capteur de température afin d'éviter que celui-ci ne mesure la température de la structure de la sonde. Cette ventilation permet également d'assurer un temps de réponse suffisamment court. La ventilation est généralement assurée grâce à la vitesse de l'aéronef qui entraîne de l'air dans le canal et dans la chambre où la mesure de température est réalisée. A bord d'un aéronef, la sonde doit fonctionner dans une large plage de vitesse ce qui entraîne des variations importantes de vitesse dans la chambre. En conséquence, la mesure réalisée par le capteur de température est entachée d'une erreur, appelée "erreur de récupération" essentiellement fonction de la vitesse de l'aéronef. A faible vitesse, l'erreur de récupération est faible, mais le temps de réponse est long. A grande vitesse, le capteur de température est bien ventilé, le temps de réponse est donc plus court mais l'erreur de récupération est importante.

Par ailleurs, les sondes montées sur aéronef sont soumises à des variations de température importantes et, parfois, à des conditions dans lesquelles du givre peut se développer, notamment à l'intérieur du tube de Pitot ou des canaux permettant la mesure de température totale TAT. Le givre perturbe les mesures et, pour l'éviter, la sonde comporte des moyens pour la réchauffer. Ces moyens comportent, en général, un fil réchauffant la sonde par effet joule. Ce fil est bobiné dans les parois de la sonde. La puissance dissipée par le fil est de l'ordre de plusieurs centaines de Watts. Cette puissance perturbe la mesure réalisée par le capteur de température en réchauffant la structure de la sonde et entraîne une erreur appelée "erreur de dégivrage" qui est d'autant plus importante que la puissance injectée est forte.

On a tenté de corriger cette erreur en plaçant un écran thermique autour du capteur de température et en optimisant les formes du canal d'entrée et de la chambre afin d'améliorer l'écoulement d'air autour du capteur de température. On a par exemple cherché à évacuer vers l'extérieur de la sonde de l'air appartenant à une couche limite thermique qui se développe le long de la paroi du canal et de la chambre de mesure de température. Cette couche limite est particulièrement perturbée par le réchauffage de la sonde. Malgré ces précautions il n'est guère possible de réaliser une bonne mesure de température totale pour des basses vitesses de l'aéronef notamment pour des vitesses de l'aéronef inférieures à Mach 0,3. L'épaisseur de cette couche limite est d'autant plus grande que la vitesse de l'aéronef est faible. Néanmoins, la précision de mesure à ces basses vitesses à une importance considérable pour la sécurité du vol car elle permet de déterminer les paramètres de l'écoulement d'air entourant l'aéronef dès la phase de roulage et avant le décollage de l'aéronef. Pour pallier ce problème on a réalisé une circulation d'air forcée dans la chambre de mesure au moyen d'un effet venturi réalisé sur le filet d'air s'échappant de la chambre. Cette solution est coûteuse car elle nécessite des adaptations mécaniques importantes. De plus, les fabricants d'aéronef imposent de pouvoir réaliser, notamment sur les avions gros porteurs de nouvelle génération, des mesures de température totale dans des conditions givrantes de plus en plus sévères ce qui impose des puissances de dégivrage plus importantes ce qui augmente encore l'erreur de dégivrage.

Le document US 5 025 661 décrit une sonde multifonction fixe comportant des moyens de mesure de pression statique, de pression totale et de température totale. Ce document ne s'intéresse pas à l'erreur de dégivrage.

Le document WO 01/05 496 décrit également une sonde multifonction fixe comportant des moyens de mesure de pression statique, de pression totale et de température totale. Ce document ne décrit aucune correction de la température mesurée.

Le document WO 01/88 496 décrit une sonde de température totale dont les formes sont adaptées pour limiter l'erreur de dégivrage. Ce document ne décrit pas de moyen de correction de cette erreur.

Le document WO03/10 948 décrit une sonde de mesure de la température totale d'un écoulement dans lequel elle est placée. Ce document précise que l'on peut corriger l'erreur due au réchauffage de la sonde en prenant en compte la vitesse de l'écoulement.

L'invention vise à pallier ces problèmes, en permettant de réaliser une détermination de la température totale de l'écoulement d'air entourant un aéronef au moyen d'une sonde dégivrée dès les basses vitesses de l'aéronef et sans ventilation forcée de la sonde.

A cet effet, l'invention a pour objet un dispositif de mesure de température totale d'un aéronef selon la revendication 1.

L'invention a également pour objet un procédé de détermination de la température totale d'un aéronef selon la revendication 6.

La sonde décrite dans la demande de brevet français FR 2 802 647 comporte une palette mobile s'orientant dans l'axe de l'écoulement d'air qui l'entoure. Cette sonde comporte des moyens de mesure de température totale et un tube de Pitot pour mesurer la pression totale de l'écoulement d'air entourant l'aéronef. La mesure de température peut être perturbée par l'incidence de l'air entrant dans les moyens de mesure de température. Dans la demande de brevet français FR 2 802 647, les moyens de mesure de température sont fixés sur la palette mobile et la mesure de température n'est donc pas perturbée par l'incidence. Néanmoins, il est bien entendu que l'invention peut être mise en oeuvre aussi bien pour une sonde comportant une palette mobile que pour une sonde n'en comportant pas. Ce type de sonde est connu sous le nom de sonde fixe et les prises de pression, tube de Pitot et moyens de mesure de température totale, ont une position fixe par rapport à la peau de l'aéronef. L'invention est également adaptée à une sonde de température totale isolée ne disposant d'aucune prise de pression. Pour réaliser la correction de la température mesurée par la sonde de température, on utilise alors les mesures réalisées par des sondes de mesure de pression disposées ailleurs sur la peau de l'aéronef.

L'invention sera mieux comprise et d'autres avantages apparaîtront à la lecture de la description détaillée d'un mode de réalisation donné à titre d'exemple, description illustrée par le dessin joint dans lequel :

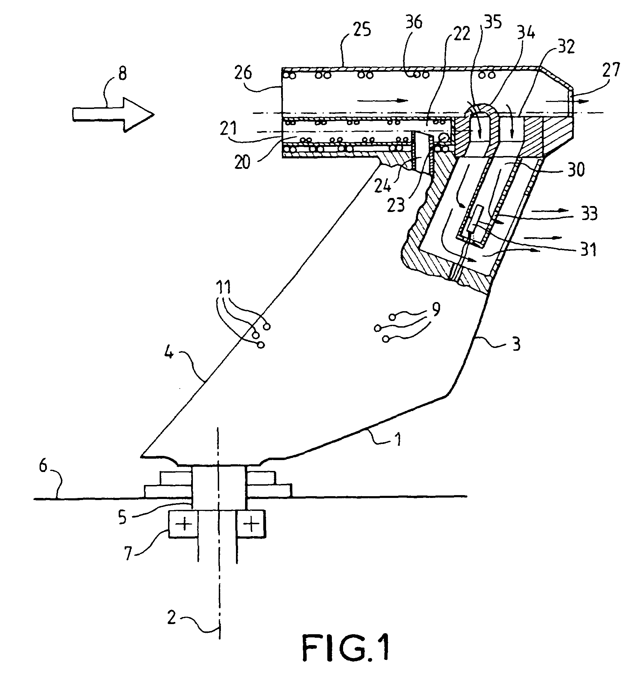

- la figure 1 représente une sonde comportant des moyens pour mesurer la température totale de l'écoulement d'air, des moyens pour mesurer la pression totale de l'écoulement d'air, des moyens pour mesurer la pression statique de l'écoulement d'air et des moyens pour mesurer l'incidence de l'écoulement d'air entourant l'aéronef, le plan de la figure contenant l'axe de l'écoulement ;

La sonde représentée figure 1 comporte une palette mobile 1 en rotation autour d'un axe 2. La palette 1 comporte une aile 3 possédant un plan de symétrie, parallèle au plan de la figure et séparant l'intrados de l'extrados. Le profil de l'aile 3 perpendiculairement à son bord d'attaque 4 est par exemple du type OOZT du N.A.C.A. Dans l'exemple représenté, le bord d'attaque 4 est sensiblement rectiligne et incliné par rapport à l'axe 2. Il est bien entendu que d'autres formes d'ailes peuvent être utilisées pour mettre en oeuvre l'invention. La palette 1 comporte également un arbre 5 d'axe 2 qui pénètre à l'intérieur de la peau 6 d'un aéronef. L'arbre 5 est mobile en rotation par rapport à l'aéronef par exemple au moyen d'un palier 7 à roulement.

Du fait de la forme de l'aile 3, la palette 1 s'oriente naturellement dans l'axe de l'écoulement d'air entourant la palette mobile 1. L'axe de l'écoulement est matérialisé par la flèche 8 représenté sur la figure 1.

Avantageusement, la sonde comporte des moyens pour mesurer la pression statique $Ps$ et l'incidence $\alpha$ de l'écoulement d'air. Les moyens pour mesurer la pression statique $Ps$ comportent par exemple deux prises de pression statique 9 et 10, situées chacune sur une des faces de la palette mobile 1. Sur la figure 1 seule la prise de pression 9 est visible. La prise de pression 10 est placée sur la face invisible de la palette mobile 1, de façon sensiblement symétrique à la prise de pression 9 par rapport au plan de symétrie de l'aile 3. Ce plan de symétrie est parallèle au plan de la figure 1. Chaque prise de pression 9 et 10 peut comporter plusieurs orifices, trois sont représentés sur la figure 1, afin notamment de limiter la section de chaque orifice pour moins perturber l'écoulement d'air entourant la palette mobile 1 ou encore d'être en mesure de réaliser la mesure de pression même si l'un des orifices venait à être obstrué. Les deux prises de pression statiques 9 et 10 sont en communication avec une chambre située à l'intérieur de la palette afin de moyenner la pression entre les deux prises 9 et 10. On mesure la pression de l'air présent dans cette chambre pour obtenir la pression statique $Ps$ de l'écoulement d'air.

Les moyens pour mesurer l'incidence de l'écoulement comportent par exemple deux prises de pression d'incidence 11 et 12 situées chacune, comme pour les prises de pression statique 9 et 10, sur une des faces de la palette également de façon sensiblement symétrique par rapport au plan de symétrie de l'aile 3. Les prises de pression d'incidence 11 et 12 ne sont pas en communication et c'est la différence entre les pressions régnant au niveau de chaque prise 11 et 12 qui permet de déterminer l'incidence exacte de la palette mobile 1 et par conséquent celle de l'aéronef. Afin d'améliorer la sensibilité de la mesure d'incidence, on peut placer les prises de pression 11 et 12 au voisinage immédiat du bord d'attaque 4 de la palette mobile 1. L'utilisation des informations issues des différentes prises de pression totale, statique et d'incidence est par exemple décrite dans le brevet français FR 2 665 539 déposé le 3 août 1990 au nom de Sextant Avionique.

Ce brevet décrit notamment l'asservissement de la position angulaire de la palette mobile 1 autour de son axe 2 afin que l'aile 3 de la palette mobile 1 soit alignée au mieux dans l'axe 8 de l'écoulement d'air.

L'orientation, ainsi améliorée, de la palette mobile 1 permet notamment d'améliorer l'alignement des moyens de mesure de pression totale Pt et de température totale TAT avec l'axe 8 de l'écoulement d'air.

Les moyens pour mesurer la pression totale sont situés dans la partie de la sonde la plus éloignée de la peau 6 de l'aéronef. Les moyens pour mesurer la pression totale comportent, par exemple, un tube 20, avantageusement à section circulaire, dit tube de Pitot, orienté sensiblement suivant l'axe 8 de l'écoulement d'air. Plus précisément, le tube 20 comporte un orifice 21 d'entrée d'air faisant sensiblement face à l'écoulement d'air d'axe 8. A l'extrémité 22 du tube 20, extrémité 22 opposée à l'orifice 21, le tube 20 comporte un trou de purge 23 permettant d'évacuer des particules susceptibles de pénétrer à l'intérieur du tube 20. Toujours au niveau de l'extrémité 22 du tube, un canal 24 s'ouvre dans le tube 20. Le canal 24 est par exemple relié à un capteur de pression non représenté sur la figure. Le capteur de pression permet de mesurer de façon effective la pression totale Pt de l'écoulement d'air.

Les moyens pour mesurer la température totale TAT comportent, par exemple, un canal 25, avantageusement à section circulaire, et ouvert sur l'écoulement d'air au niveau d'un orifice d'entrée 26. Le canal 25 comporte également un orifice de sortie 27 permettant à de l'air se trouvant dans le canal 25 de s'échapper en suivant la direction de l'axe 8. La section de l'orifice d'entrée 26 est sensiblement celle du canal 25 et la section de l'orifice de sortie 27 est inférieure à celle de l'orifice d'entrée 26. L'orifice de sortie 27 permet à des particules circulant dans le canal 25 de s'évacuer sans venir en contact avec un capteur de température dont la position sera décrite ultérieurement. Ces particules sont, par exemple, formées de gouttes d'eau ou de poussières.

Les moyens pour mesurer la température totale TAT comportent en outre une chambre 30 dans lequel circule une partie de l'air circulant dans le canal 25, ainsi qu'un capteur de température 31 fixé dans la chambre 30. La chambre 30 comporte une entrée d'air 32 située dans le canal 25. Une partie de l'air circulant dans le canal 25 pénètre dans la chambre 30 par l'entrée d'air 32 et s'échappe de la chambre 30 par une sortie d'air 33 s'ouvrant sur l'extérieur vers l'aval de la sonde. La géométrie du canal 25, de l'entrée d'air 32 et de la chambre 30 est déterminée de telle sorte à ralentir le flux d'air pénétrant dans la chambre 30.

Avant de pénétrer dans la chambre 30, l'air circulant dans le canal 25 passe au-dessus d'un déflecteur 34 comportant un orifice 35 permettant d'évacuer vers l'extérieur de la sonde de l'air appartenant à une couche limite qui se développe le long de la paroi du tube de Pitot 20 à l'intérieur du canal 25.

La sonde comporte des moyens de dégivrage permettant de réchauffer la sonde. Ces moyens sont nécessaires notamment lorsque l'aéronef qui porte la sonde vole dans des conditions dans lesquelles du givre risque de se former sur les parois de la sonde. Les moyens de dégivrage comportent, par exemple, un fil chauffant 36 enroulé en hélice a l'intérieur du tube 20 et du canal 25. Le fil chauffant 36 est soumis à une tension électrique et réchauffe la sonde par effet joule.

Selon l'invention, le dispositif comporte des moyens de correction d'une température relevée par le capteur de température en fonction des paramètres infinis amonts de l'aéronef et de la puissance dissipée dans la sonde pour le dégivrage, pour obtenir la température totale du flux d'air. Ces moyens sont par exemple installés dans une carte électronique disposée à l'intérieur de la sonde ou encore dans un calculateur propre à l'aéronef et permettant de déterminer les paramètres de vol de l'aéronef.

Ces moyens ont été calibrés après des essais en soufflerie et ces essais ont permis d'élaborer un modèle de correction des erreurs de récupération et de dégivrage. Dans ce modèle les deux erreurs, récupération et dégivrage sont corrigées de façon indépendante. Une température totale corrigée $TAT_{corrigée}$ peut s'exprimer de la façon suivante :

$$TAT_{corrigée} = TAT_{mesurée} - Correction_{récup} - Correction_{dégivrage}$$

où $TAT_{mesurée}$ représente la température mesuré par le capteur de température,
où $Correction_{récup}$ représente la correction appliquée pour tenir compte de l'erreur de récupération,
et où $Correction_{dégivrage}$ représente la correction appliquée pour tenir compte de l'erreur de dégivrage.

L'erreur de récupération est corrigée à l'aide d'une fonction linéaire de la vitesse de l'aéronef exprimée en nombre de Mach. Cette fonction est exprimée de la façon suivante :

$$Correction_{récup} = f \times M\infty + g$$

où f et g sont des constantes déterminées à partir de résultats expérimentaux réalisés en soufflerie de la sonde considérée soumise à différentes vitesses de flux d'air,
et où $M\infty$ représente le nombre de Mach de l'écoulement à l'infini amont.

L'erreur de dégivrage est corrigée à l'aide d'une fonction de la vitesse de l'aéronef exprimée en nombre de Mach, d'une puissance P dissipée dans la sonde pour son dégivrage et d'une pression totale infini amont $Pt\infty$. Cette

fonction est exprimée de la façon suivante :

$$\text{Correction}_{\text{dégivrage}} = (aP^2 + bP)(c\,M\infty^2 + d\,M\infty + e)\left[\frac{101325}{Pt\infty}\left(1 + 0,2M\infty^2\right)^{2,5}\right]^{0,2}$$

où a et b sont des polynômes fonction de Z et de $M\infty$, Z étant le nombre de Mach réduit,
et où c, d et e sont des constantes déterminées à partir de résultats expérimentaux réalisés en soufflerie de la sonde considérée.

Les polynômes a et b s'expriment par exemple sous la forme :

a = k x (l - $M\infty$) si $M\infty$ < 0,7 et a = $k_0$ si $M\infty$ > 0,7
b= m x $Z^{-\delta}$ x $(1 + n\,x\,M\infty^2)^{-\delta}$
où $k_0$, k, l, m et n sont des constantes et où $\delta$ est fonction de l'altitude de l'aéronef.

Lorsqu'une sonde comporte en plus du capteur de température, des moyens pour mesurer la pression statique Ps et des moyens pour mesurer la pression totale Pt de l'écoulement entourant la sonde, celle ci devient autonome. Plus précisément avec les paramètres que la sonde mesure, il est possible de corriger la valeur mesurée par le capteur de température afin d'obtenir une valeur fiable de la température totale de l'écoulement.

En pratique, les pressions Ps et Pt mesurées par la sonde sont des pressions statiques et totales locales autour de la sonde. Les pressions Ps et Pt permettent de calculer un nombre de Mach local $M_{loc}$ de la façon suivante :

$$M_{loc} = \sqrt{5\left[\left(\frac{Pt}{Ps}\right)^{2/7} - 1\right]}$$

Le nombre de Mach infini amont $M\infty$ de l'écoulement est déterminé de façon empirique à partir du nombre de Mach local $M_{loc}$. par exemple par une formule polynomiale. On peut exprimer cette formule de la façon suivante :

$$M\infty = p\,x\,M_{loc}^{6} - q\,x\,M_{loc}^{5} + r\,x\,M_{loc}^{4} - s\,x\,M_{loc}^{3} + t\,x\,M_{loc}^{2} - u\,x\,M_{loc} + v$$

où p, q, r, s, t, u et v sont des constantes déterminées à partir d'essais en soufflerie.

De même la pression totale infini amont $Pt\infty$ peut être déterminé de façon empirique à partir du nombre de Mach local $M_{loc}$. et de la pression totale mesurée Pt

$$Pt\infty = -\alpha\,x\,Pt\,x\,M_{loc}^{2} + \beta\,x\,Pt\,x\,M_{loc} + \chi\,x\,Pt + \varepsilon$$

où $\alpha$, $\beta$, $\chi$ et $\varepsilon$ sont des constantes déterminées à partir d'essais en soufflerie.

La pression statique infini amont $Ps\infty$ peut être déterminé par la formule :

$$Ps\infty = Pt\infty\,x(\,1 + 0,2\,x\,M\infty^2)^{-3,5}$$

Avantageusement, on peut améliorer la correction appliquée à la mesure de température totale $TAT_{mesurée}$ en tenant compte de la température moyenne de la sonde qui perturbe la mesure par le rayonnement de la structure de la sonde.

En pratique, pour connaître la température moyenne de la sonde, on peut utiliser un fil chauffant 36 dont la résistance varie en fonction de sa température. On peut donc déduire la température moyenne de la sonde de la mesure de résistance du fil chauffant 36.

**Revendications**

1. Dispositif de mesure de température totale (TAT) d'un aéronef, comportant une sonde adaptée à être fixée sur une peau de l'aéronef, la sonde comportant:

   - des moyens de mesure d'une température totale (25, 30, 31),
   - des moyens (36) pour dissiper une puissance thermique (P) destinée à éviter que du givre ne se forme dans la sonde,
   - des moyens de correction d'une erreur de récupération pour une température ($TAT_{mesurée}$) relevée par les moyens de mesure d'une température totale (25, 30, 31) en fonction de paramètres infinis amonts ($M\infty$, $Pt\infty$, $Ps\infty$) pour obtenir la température totale du flux d'air ($TAT_{corrigée}$),
   **caractérisé en ce que**
   - les dits moyens de correction sont aussi aptes à corriger une erreur de dégivrage de la sonde pour une température ($TAT_{mesurée}$) relevée par les moyens de mesure d'une température totale (25, 30, 31) en fonction des paramètres infinis amonts ($M\infty$, $Pt\infty$, $Ps\infty$) et de la puissance (P) dissipée dans la sonde, pour obtenir la température totale du flux d'air ($TAT_{corrigée}$).

2. Dispositif selon la revendication 1, **caractérisé en ce que** les paramètres infinis amonts utilisés par les moyens de correction d'une température comprennent un nombre de Mach de l'écoulement à l'infini amont de l'aéronef (Moo), une pression totale infinie amont ($Pt\infty$) de l'aéronef et une pression statique ($Ps\infty$) infinie amont de l'aéronef.

3. Dispositif selon l'une des revendications précédentes, **caractérisé en ce que** les moyens de mesure d'une température totale (25, 30, 31) comportent une chambre (30) dans laquelle pénètre une partie d'un flux d'air entourant la peau de l'aéronef, des moyens pour ralentir le flux d'air pénétrant dans la chambre (30), un capteur de température (31) disposé dans la chambre (30) et destiné à mesurer la température du flux d'air ralenti.

4. Dispositif selon l'une des revendications précédentes, **caractérisé en ce qu'**il comporte des moyens (9) pour mesurer la pression statique (Ps) de l'écoulement d'air.

5. Dispositif selon l'une des revendications précédentes, **caractérisé en ce qu'**il comporte des moyens (20 à 24) pour mesurer la pression totale (Pt) de l'écoulement d'air.

6. Procédé de détermination de la température totale (TAT) d'un aéronef, utilisant une sonde fixée sur une peau de l'aéronef, la sonde comportant:

   - des moyens de mesure d'une température totale (25, 30, 31),
   - des moyens (36) pour dissiper une puissance thermique (P) destinée à éviter que du givre ne se forme dans la sonde,

   et consistant à corriger une erreur de récupération pour une température ($TAT_{mesurée}$) relevée par les moyens de mesure d'une température totale (25, 30, 31) en fonction de paramètres infinis amonts ($M\infty$, $Pt\infty$, $Ps\infty$) pour obtenir la température totale du flux d'air ($TAT_{corrigée}$),
   **caractérisé en ce qu'**une erreur de dégivrage de la sonde pour une température ($TAT_{mesurée}$) relevée par les moyens de mesure d'une température totale (25, 30, 31 ) est aussi corrigée en fonction de paramètres infinis amonts ($M\infty$, $Pt\infty$, $Ps\infty$) et de la puissance (P) dissipée dans la sonde, pour obtenir la température totale du flux d'air ($TAT_{corrigée}$).

7. Procédé selon la revendication 6, **caractérisé en ce que** les paramètres infinis amonts utilisés par les moyens de correction d'une température comprennent un nombre de Mach de l'écoulement à l'infini amont de l'aéronef ($M\infty$), une pression totale infinie amont ($Pt\infty$) de l'aéronef et une pression statique ($Ps\infty$) infinie amont de l'aéronef.

8. Procédé selon l'une quelconques des revendications 6 ou 7, **caractérisé en ce qu'**il consiste à corriger une erreur de récupération due à la vitesse de l'aéronef à l'aide d'une fonction linéaire de la vitesse ($M\infty$, $M_{loc}$) de l'aéronef cette fonction étant exprimée de la façon suivante :

$$Correction_{récup} = f \times M\infty + g$$

où Correction$_{récup}$ est une correction appliquée à une température (TAT$_{mesurée}$) mesurée par le capteur de température et représentative de l'erreur de récupération,

où f et g sont des constantes déterminées à partir de résultats expérimentaux réalisés en soufflerie de la sonde considérée soumise à différentes vitesses de flux d'air,

et où M∞ représente le nombre de Mach de l'écoulement à l'infini amont.

**9.** Procédé selon l'une quelconque des revendications 6 à 8, **caractérisé en ce qu'**il consiste à corriger une erreur de dégivrage due aux moyens (36) pour dissiper une puissance thermique à l'aide d'une fonction de la vitesse (M∞, M$_{loc}$) de l'aéronef exprimée en nombre de Mach et de la puissance la puissance dissipée dans la sonde pour le dégivrage, cette fonction étant exprimée de la façon suivante :

$$\text{Correction}_{\text{dégivrage}} = (aP^2 + bP)\,(c\,M\infty^2 + d\,M\infty + e)\left[\frac{101325}{Pt\infty}\left(1 + 0{,}2M\infty^2\right)^{2,5}\right]^{0,2}$$

où Correction$_{dégivrage}$ est une correction appliquée à une température mesurée par le capteur de température et représentative de l'erreur de dégivrage,

où a et b sont des polynômes fonction de Z et de M∞, Z étant le nombre de Mach réduit,

et où c, d et e sont des constantes déterminées à partir de résultats expérimentaux réalisés en soufflerie de la sonde considérée,

les polynômes a et b s'exprimant par exemple sous la forme :

$$a = k \times (l - M\infty),$$

$$b = m \times Z^{-\delta} \times (1 + n \times M\infty^2)^{-\delta}$$

où k, l, m et n sont des constantes et où δ est fonction de l'altitude de l'aéronef.

**10.** Procédé selon l'une quelconque des revendications 6 à 9, **caractérisé en ce qu'**il consiste à corriger la température (TAT$_{mesurée}$) relevée par les moyens de mesure d'une température totale (25, 30, 31) en fonction de la température moyenne de la sonde

**Claims**

**1.** A device for measuring the total temperature (TAT) of an aircraft, comprising a probe designed to be fixed to a skin of the aircraft, said probe comprising:

- means for measuring a total temperature (25, 30, 31),
- means (36) for dissipating a thermal power (P) designed to prevent ice from forming in the probe,
- means for correcting a restoring error for a temperature (TAT$_{measured}$) recorded by the means for measuring a total temperature (25, 30, 31) as a function of upstream infinite parameters (M∞, Pt∞, Ps∞) in order to obtain the total temperature of the airflow (TAT$_{corrected}$),
**characterised in that**
- said correction means are also designed to correct a deicing error in the probe for a temperature (TAT$_{measured}$) recorded by the means for measuring a total temperature (25, 30, 31) as a function of the upstream infinite parameters (M∞, Pt∞, Ps∞) and of the power (P) dissipated in the probe in order to obtain the total temperature of the airflow (TAT$_{corrected}$).

**2.** The device according to claim 1, **characterised in that** the upstream infinite parameters used by the means for correcting a temperature comprise a Mach number of the upstream infinite flow of the aircraft (M∞), an upstream infinite total pressure (Pt∞) of the aircraft and an upstream infinite static pressure (Ps∞) of the aircraft.

**3.** The device according to any one of the preceding claims, **characterised in that** the means for measuring a total temperature (25, 30, 31) comprise a chamber (30) into which enters part of an airflow surrounding a skin of the aircraft, means for decelerating the airflow entering the chamber (30) and a temperature sensor (31) arranged inside the chamber (30) and designed to measure the temperature of the decelerated airflow.

4. The device according to any one of the preceding claims, **characterised in that** it comprises means (9) for measuring the static pressure (Ps) of the airflow.

5. The device according to any one of the preceding claims, **characterised in that** it comprises means (20 to 24) for measuring the total pressure (Pt) of the airflow.

6. A process for determining the total temperature (TAT) of an aircraft, using a probe fixed to a skin of the aircraft, said probe comprising:

   - means for measuring a total temperature (25, 30, 31),
   - means (36) for dissipating a thermal power (P) designed to prevent ice from forming in the probe,

   and consisting in correcting a restoring error for a temperature ($TAT_{measured}$) recorded by the means for measuring a total temperature (25, 30, 31) as a function of the upstream infinite parameters ($M\infty$, $Pt\infty$, $Ps\infty$) in order to obtain the total temperature of the airflow ($TAT_{corrected}$),
   **characterised in that** a deicing error in the probe for a temperature ($TAT_{measured}$) recorded by the means for measuring a total temperature (25, 30, 31) is also corrected as a function of the upstream infinite parameters ($M\infty$, $Pt\infty$, $Ps\infty$) and of the power (P) dissipated in the probe in order to obtain the total temperature of the airflow ($TAT_{corrected}$).

7. The process according to claim 6, **characterised in that** the upstream infinite parameters used by the means for correcting a temperature comprise a Mach number of the upstream infinite flow of the aircraft ($M\infty$), an upstream infinite total pressure ($Pt\infty$) of the aircraft and an upstream infinite static pressure ($Ps\infty$) of the aircraft.

8. The process according to any one of claims 6 to 7, **characterised** that it consists in correcting a restoring error caused by the speed of the aircraft using a linear function of the speed ($M\infty$, $M_{loc}$) of the aircraft, this function being expressed as follows:

$$\text{Correction}_{restor} = f \times M\infty + g$$

   where $\text{Correction}_{restor}$ is a correction applied to a temperature ($TAT_{measured}$) measured by the temperature sensor and which represents the restoring error,
   where f and g are constants determined from the experimental results from wind tunnel tests on the relevant probe subject to different airflows speeds,
   and where $M\infty$ represents the Mach number of the upstream infinite flow.

9. The process according to any one of claims 6 to 8, **characterised in that** it consists in correcting a deicing error caused by means (36) for dissipating thermal power using a function of the speed ($M\infty$, $M_{loc}$) of the aircraft expressed as the Mach number and the power dissipated in the probe for deicing, this function being expressed as follows:

$$\text{Correction}_{deicing} = (aP^2 + bP)(c\,M\infty^2 + d\,M\infty + e)\left[\frac{101325}{Pt\infty}\left(1 + 0{,}2M\infty^2\right)^{2.5}\right]^{0{,}2}$$

   where $\text{Correction}_{deicing}$ is a correction which is applied to a temperature measured by the temperature sensor and which represents the deicing error,
   where a and b are polynomials according to Z and $M\infty$, Z being a reduced Mach number,
   and where c, d and e are constants determined from the experimental results from wind tunnel tests on the relevant probe,
   polynomials a and b being expressed, for example, as:

$$a = k \ x \ (l - M\infty),$$

$$b = m \ x \ Z^{-\delta} \ X \ (1 + n \ x \ M\infty^2)^{-\delta}$$

where k, l, m and n are constants and where $\delta$ depends on the altitude of the aircraft.

**10.** The process according to any one of claims 6 to 9, **characterised in that** it consists in correcting the temperature ($TAT_{measured}$) recorded by the means for measuring a total temperature (25, 30, 31) as a function of the average temperature of the probe.

**Patentansprüche**

**1.** Vorrichtung zum Messen der Gesamttemperatur (TAT) eines Luftfahrzeugs, umfassend eine Sonde, die zum Montieren an einer Haut des Luftfahrzeugs gestaltet ist, wobei die Sonde Folgendes umfasst:

- Mittel zum Messen einer Gesamttemperatur (25, 30, 31),
- Mittel (36) zum Abführen von Wärmeleistung (3), um Eisbildung in der Sonde zu verhindern,
- Mittel zum Korrigieren eines Rückführungsfehlers für eine von dem Mittel zum Messen einer Gesamttemperatur (25, 30, 31) aufgezeichnete Temperatur ($TAT_{gemessen}$) in Abhängigkeit von stromaufwärtigen unendlichen Parametern (M∞, Pt∞, Ps∞), um die Gesamttemperatur des Luftstroms ($TAT_{korrigiert}$) zu erhalten,
**dadurch gekennzeichnet, dass**
- die Korrekturmittel auch zum Korrigieren eines Enteisungsfehlers in der Sonde für eine von dem Mittel zum Messen einer Gesamttemperatur (25, 30, 31) aufgezeichnete Temperatur ($TAT_{gemessen}$) in Abhängigkeit von den stromaufwärtigen unendlichen Parametern (M∞, Pt∞, Ps∞) und von der in der Sonde abgeführten Leistung (P) ausgelegt ist, um die Gesamttemperatur des Luftstroms ($TAT_{korrigiert}$) zu erhalten.

**2.** Vorrichtung nach Anspruch 1, **dadurch gekennzeichnet, dass** die von dem Mittel zum Korrigieren einer Temperatur verwendeten stromaufwärtigen unendlichen Parameter eine Mach-Zahl des unendlichen Stroms (M∞) stromaufwärts von dem Luftfahrzeug, einen unendlichen Gesamtdruck (Pt∞) stromaufwärts von dem Luftfahrzeug und einen unendlichen statischen Druck (Ps∞) stromaufwärts von dem Luftfahrzeug beinhalten.

**3.** Vorrichtung nach einem der vorherigen Ansprüche, **dadurch gekennzeichnet, dass** die Mittel zum Messen einer Gesamttemperatur (25, 30, 31) Folgendes umfassen:

eine Kammer (30), in die ein Teil eines die Haut des Luftfahrzeugs umgebenden Luftstroms eindringt, Mittel zum Verlangsamen des in die Kammer (30) eindringenden Luftstroms und einen Temperatursensor (31), der sich in der Kammer (30) befindet und so ausgelegt ist, dass er die Temperatur des verlangsamten Luftstroms misst.

**4.** Vorrichtung nach einem der vorherigen Ansprüche, **dadurch gekennzeichnet, dass** sie Mittel (9) zum Messen des statischen Drucks (Ps) des Luftstroms umfasst.

**5.** Vorrichtung nach einem der vorherigen Ansprüche, **dadurch gekennzeichnet, dass** sie Mittel (20 bis 24) zum Messen des Gesamtdrucks (Pt) des Luftstroms umfasst.

**6.** Verfahren zum Ermitteln der Gesamttemperatur (TAT) eines Luftfahrzeugs mittels einer an einer Haut des Luftfahrzeugs montierten Sonde, die Folgendes umfasst:

- Mittel zum Messen einer Gesamttemperatur (25, 30, 31),
- Mittel (36) zum Abführen einer Wärmeleistung (P), um Eisbildung in der Sonde zu verhindern,

und wobei das Verfahren darin besteht, einen Rückführungsfehler für eine von dem Mittel zum Messen einer Gesamttemperatur (25, 30, 31) aufgezeichnete Temperatur ($TAT_{gemessen}$) in Abhängigkeit von stromaufwärtigen unendlichen Parametern (M∞, Pt∞, Ps∞) zu korrigieren, um die Gesamttemperatur des Luftstroms ($TAT_{korrigiert}$) zu erhalten,
**dadurch gekennzeichnet, dass** ein Enteisungsfehler in der Sonde für eine von dem Mittel zum Messen einer Gesamttemperatur (25, 30, 31) aufgezeichnete Temperatur ($TAT_{gemessen}$) auch in Abhängigkeit von den stromaufwärtigen unendlichen Parametern ($M\infty$, $Pt\infty$, $Ps\infty$) und von der in der Sonde abgeführten Leistung (P) korrigiert wird, um die Gesamttemperatur des Luftstroms ($TAT_{korrigiert}$) zu erhalten.

7. Verfahren nach Anspruch 6, **dadurch gekennzeichnet, dass** die von dem Mittel zum Korrigieren einer Temperatur benutzten stromaufwärtigen unendlichen Parameter eine Mach-Zahl des unendlichen Stroms ($M\infty$) stromaufwärts von dem Luftfahrzeug, einen unendlichen Gesamtdruck ($Pt\infty$) stromaufwärts von dem Luftfahrzeug und einen unendlichen statischen Druck ($Ps\infty$) stromaufwärts von dem Luftfahrzeug beinhalten.

8. Verfahren nach einem der Ansprüche 6 bis 7, **dadurch gekennzeichnet, dass** es darin besteht, einen durch die Geschwindigkeit des Luftfahrzeugs verursachten Rückführungsfehler mit einer Linearfunktion der Geschwindigkeit ($M\infty$, $M_{loc}$) des Luftfahrzeugs zu korrigieren, wobei diese Funktion wie folgt ausgedrückt wird:

$$Korrektur_{Rückführung} = f \times M\infty + g$$

wobei $Korrektur_{Rückführung}$ eine Korrektur ist, die auf eine Temperatur ($TAT_{gemessen}$) angewandt wird, die von dem Temperatursensor gemessen wird und den Rückführungsfehler repräsentiert,
wobei f und g Konstanten sind, die von experimentellen Ergebnissen von Windtunneltests an der relevanten Sonde bei unterschiedlichen Luftströmungsgeschwindigkeiten ermittelt wurden,
und wobei $M\infty$ die Mach-Zahl des stromaufwärtigen unendlichen Stroms repräsentiert.

9. Verfahren nach einem der Ansprüche 6 bis 8, **dadurch gekennzeichnet, dass** es darin besteht, einen von dem Mittel (36) zum Abführen von Wärmeleistung verursachten Enteisungsfehler mit Hilfe einer Funktion der Geschwindigkeit ($M\infty$, $M_{loc}$) des Luftfahrzeugs, ausgedrückt als die Mach-Zahl, und der in der Sonde zum Enteisen abgeführten Leistung abzuleiten, wobei diese Funktion wie folgt ausgedrückt wird:

$$Korrektur_{Enteisung} = (aP^2 + bP)\,(c\,M\infty^2 + d\,M\infty + e)^{\left[\frac{101325}{Pt\infty}\left(1 + 0,2M^2\right)^{2.5}\right]^{0,2}}$$

wobei $Korrektur_{Enteisung}$ eine Korrektur ist, die auf eine Temperatur angewendet wird, die von dem Temperatursensor gemessen wurde und die den Enteisungsfehler repräsentiert,
wobei a und b Polynome gemäß Z und $M\infty$ sind, wobei Z eine reduzierte Mach-Zahl ist,
und wobei c, d und e Konstanten sind, die von experimentellen Ergebnissen von Windtunneltests an der betrachteten Sonde ermittelt werden,
wobei die Polynome a und b zum Beispiel ausgedrückt werden als:

$$a = k \times (1 - M\infty),$$

$$b = m \times Z^{-\delta} \times (1 + n \times M\infty^2)^{-\delta}$$

wobei k, 1, m und n Konstanten sind und wobei $\delta$ von der Höhe des Luftfahrzeugs abhängig ist.

10. Verfahren nach einem der Ansprüche 6 bis 9, **dadurch gekennzeichnet, dass** es darin besteht, die von dem Mittel zum Messen einer Gesamttemperatur (25, 30, 31) aufgezeichneten Temperatur ($TAT_{gemessen}$) in Abhängigkeit von der durchschnittlichen Temperatur der Probe zu korrigieren.

FIG.1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2802647
- US 5025661 A
- WO 0105496 A
- WO 0188496 A
- WO 0310948 A
- FR 2665539